# NEUE EUROPÄISCHE PATENTSCHRIFT

(11) **EP 1 072 469 B2**
(45) Veröffentlichungstag und Bekanntmachung des Hinweises auf die Entscheidung über den Einspruch: **27.07.2011**
(45) Hinweis auf die Patenterteilung: 05.12.2007
(21) Anmeldenummer: 00114721.4
(22) Anmeldetag: 08.07.2000
(51) Int. Cl.: B60Q 3/04, G09F 9/00

(54) **Anzeige mit einem durchleuchtbaren Anzeigefeld**
Display with transparent indicating element
Indicateur avec élément d'affichage transparent

(30) Priorität: 29.07.1999 DE 19935386
(43) Veröffentlichungstag der Anmeldung: 31.01.2001
(73) Patentinhaber: Continental Automotive GmbH, 30165 Hannover (DE)
(72) Erfinder: Noll, Heinrich, Dr., 64823 Gross-Umstadt (DE); Janssen, Hermann, 63741 Aschaffenburg (DE)

(56) Entgegenhaltungen:
- EP-A- 0 803 711
- EP-A1- 0 803 711
- DE-A1- 3 627 697
- DE-A1- 3 643 841
- DE-A1- 19 749 084
- PATENT ABSTRACTS OF JAPAN Bd. 1999, Nr. 08, 30. Juni 1999 (1999-06-30) -& JP 11 085062 A (DENSO CORP; TOYOTA MOTOR CORP), 30. März 1999 (1999-03-30)

## Beschreibung

Die Erfindung betrifft eine Anzeige, insbesondere für ein Kraftfahrzeug, mit einem durchleuchtbaren Anzeigefeld und einer auf der einem Beobachter abgewandten Rückseite des Anzeigefeldes angeordneten Beleuchtungseinrichtung zur Durchleuchtung des Anzeigefeldes.

Eine derartige Anzeige ist aus EP0803711A gemäss Oberbegriff des Anspruchs 1 bekannt und wird insbesondere in Kraftfahrzeugen zur Visualisierung von Warnsignalen oder Betriebszuständen verschiedenster Einrichtungen eingesetzt. Dabei ist zur Anzeige jeweils einer Warn- oder Kontrollfunktion ein eigenes, separates Anzeigefeld vorgesehen. Um die Ablesbarkeit der Anzeige erschwerende Lichtübertritte zwischen den einzelnen Anzeigefeldern zu vermeiden, weist jedes Warn- oder Kontrollfeld eine eigene Lichtquelle mit einem, vorgenannten Lichtübertritt verhindernden, Lichtschacht auf. Durch den insbesondere bei modernen Kraftfahrzeugen erheblich angestiegenen Einsatz von Hilfseinrichtungen, wie z. B. Antiblockiersystem, Insassenairbags, Traktionskontrolle, ist eine entsprechend hohe Anzahl von Kontrollfeldern erforderlich. Damit ist sowohl ein großer Flächenbedarf für die Anzeige als auch ein hoher baulicher Aufwand für ihre Beleuchtung erforderlich.

Außerdem ist es bekannt, mittels aktiver, frei ansteuerbarer Anzeigefelder oder über Projektionsmechanismen eine Visualisierung von Warnungen und Hinweisen vorzunehmen. Derartige Vorrichtungen sind aufwendig im Aufbau, beanspruchen einen erheblichen Einbauraum und weisen ein vergleichsweise hohes Gewicht auf.

Die DE 197 49 084 A1 beschreibt eine Anzeige mit den Merkmalen der Oberbegriffe der Patentansprüche 1 und 3.

Hierbei ist von der Beleuchtungseinrichtung Licht eines ersten und/oder eines zweiten Wellenlängenbereichs ausstrahlbar und das Licht des ersten Wellenlängenbereichs im wesentlichen nur durch einen ersten Bereich des Anzeigefeldes und das Licht des zweiten Wellenlängenbereichs im wesentlichen nur durch einen zumindest teilweise von dem ersten Bereich des Anzeigefeldes verschiedenen zweiten Bereich des Anzeigefeldes hindurchtretbar ist. Eine geringe Resttransmission von Licht in einem Bereich, durch den es nicht hindurchtretbar ist, kann dabei gegebenenfalls zulässig sein, um den Herstellungsaufwand der Anzeige niedrig zu halten.

Hierbei können in einem einzigen Anzeigefeld mehrere Warn- oder Kontrollfunktionen dargestellt werden. Mit den unterschiedlichen Bereichen des Anzeigefeldes sind dabei unterschiedliche Informationen z. B. in Form von Zeichen und/oder Symbolen darstellbar. Darüber hinaus ist die Herstellung und der Aufbau der erfindungsgemäßen Anzeige erheblich vereinfacht, da eine geringere Anzahl von Lichtschächten und Lichtführungen gegenüber den bekannten Anzeigen erforderlich ist. Damit verringert sich zugleich auch das Gewicht der Anzeige. Eine optimale Raumausnutzung und maximale Gewichtsreduzierung spielt vor allem in Kraftfahrzeugen eine große Rolle, so daß die erfindungsgemäße Anzeige hier besonders vorteilhaft eingesetzt werden kann. Gleichzeitig wird die Übersichtlichkeit und Ablesbarkeit der Instrumente und somit - durch eine geringere Ablenkung des Fahrzeugführers - die Verkehrssicherheit mit der Erfindung wesentlich erhöht.

Aufgabe der Erfindung ist es, nahezu beliebige Informationen alleine oder in Kombination miteinander darzustellen. Die obengenannte Aufgabe wird erfindungsgemäß durch eine Anzeige mit den Merkmalen des Anspruchs 1 oder 3 gelöst. Erfindungsgemäß weist das Anzeigefeld einen Bereich auf, durch den sowohl Licht des ersten Wellenlängenbereichs als auch Licht des zweiten Wellenlängenbereichs hindurchtretbar ist. Werden Informationen mit beliebigen Zeichen und/oder Symbolen visualisiert, so ist auf vorgenannte, einfache Weise auch eine Überschneidung der anzeigbaren Zeichen und/oder Symbole möglich.

Bei der zweiten erfindungsgemäßen Anzeige sind in voneinander separierten Bereichen des Anzeigefeldes Informationen in unterschiedlichen Farben darstellbar. Dabei ist die Festlegung der unterschiedlichen Farbbereiche allein von der Gestaltung des Lichtfilters abhängig.

Die Anzeige ist besonders gut ablesbar und weist einen hohen Kontrast auf, wenn vorteilhaft das Anzeigefeld einen Bereich aufweist, der sowohl einen Durchtritt von Licht des ersten Wellenlängenbereichs als auch einen Durchtritt von Licht des zweiten Wellenlängenbereichs im wesentlichen sperrt. Eine vollständige Sperrung bietet dabei den höchsten Kontrast; jedoch kann eine geringe Resttransmission in dem gesperrten Bereich vorgesehen sein, ohne die Vorteile der Erfindung zu vermindern.

Gemäß einer vorteilhaften Weiterbildung der Erfindung ist der Lichtfilter eine Farbfilterscheibe, wodurch eine besonders kompakte Anzeige erhalten wird und ein einfacher Austausch des Lichtfilters sowie dessen kostengünstige Herstellung sichergestellt ist.

Eine besonders gleichmäßige Beleuchtung des Anzeigefeldes wird erreicht, wenn der Lichtfilter ein Streufilter ist. Dabei kann der Lichtfilter über seine gesamte Lichtdurchtrittsfläche gleichmäßige Streueigenschaften aufweisen oder die Diffusion an die erwünschte Ausleuchtung von Bereichen des Anzeigefeldes angepaßt sein.

Eine besonders kontrastreiche Anzeige ergibt sich, wenn gemäß einer anderen Weiterbildung der Erfindung der Lichtfilter einen Bereich aufweist, der sowohl einen Durchtritt von Licht des ersten Wellenlängenbereichs als auch einen Durchtritt von Licht des zweiten Wellenlängenbereichs im wesentlichen sperrt. Es kann dabei gegebenenfalls zulässig sein, daß der sperrende Bereich z. B. zur Erzeugung eines farbigen Anzeigehintergrundes eine geringe Resttransmission von Licht zuläßt.

Der Lichtfilter weist erfindungsgemäß einen Bereich auf, durch den sowohl Licht des ersten Wellenlängenbereichs als auch Licht des zweiten Wellenlängenbereichs hindurchtretbar ist, Hierdurch kann die Anzeigevielfalt durch ein Zulassen von sich überschneidenden Informationsdarstellungen weiter erhöht werden.

Die in den verschiedenen Bereichen des Anzeigefeldes darstellbaren unterschiedlichen Informationen sind für einen Beobachter besonders schnell und sicher aufnehmbar, wenn sie in eindeutig erfaßbaren Farben mit hoher Unterscheidungskraft angezeigt werden. Daher umfaßt gemäß einer besonders vorteilhaften Weiterbildung der Erfindung einer der Wellenlängenbereiche in etwa blaues Licht und/oder einer der Wellenlängenbereiche in etwa grünes Licht und/oder einer der Wellenlängenbereiche in etwa rotes Licht.

Diese Wellenlängenbereiche können in beliebiger Weise miteinander kombiniert werden. Bei einer Anzeige für ein Kraftfahrzeug ist es beispielsweise vorteilhaft, in einem Anzeigefeld blau die Einschaltung von Fernlicht und in demselben Anzeigfeld in grüner Farbe die Einschaltung von Fahrlicht (Abblendlicht) zu signalisieren. Eine Kombination einer grünen und einer roten Beleuchtung eines Anzeigefeldes dient vorzugsweise dazu, das Vorliegen einer Größe (z. B. Kühlwassertemperatur) im normalen Betriebsbereich zu signalisieren, wohingegen das Anzeigefeld bei Überschreiten einer oberen Bereichsgrenze (z. B. zulässige Höchsttemperatur) rot beleuchtet wird. Hierfür könnte aber auch ein Farbwechsel blau (kalt)/rot (heiß) vorgesehen sein. Darüber hinaus ist es auch vorstellbar, ein Anzeigefeld wahlweise in einer von drei Farben (blau, grün, rot), deren Wellenlängen deutlich voneinander getrennt sind, zu beleuchten, wobei in dem Anzeigefeld beispielsweise grün ein Symbol für eingeschaltetes Fahrlicht, blau ein Symbol für eingeschaltetes Fernlicht und rot ein Symbol zur Signalisation eines Fehlers in der Fahrzeuglichtanlage angezeigt wird.

Für eine kontrastreiche und gut wahrnehmbare Darstellung umfaßt gemäß einer anderen vorteilhaften Weiterbildung der Erfindung das blaue Licht Wellenlängen von in etwa 430 bis 490 nm und/oder das grüne Licht Wellenlängen von in etwa 510 bis 590 nm und/oder das rote Licht Wellenlängen von in etwa 610 bis 750 nm.

Für eine klare Darstellung auf der Anzeige ist es vor allem wichtig, daß die Durchlässigkeit der verschiedenen Bereiche des Anzeigefeldes für Licht der verschiedenen Wellenlängenbereiche deutlich unterschiedlich ist. Von geringerer Bedeutung ist hingegen die Durchlässigkeit für Licht höherer beziehungsweise niedrigerer Wellenlängen. Die erfindungsgemäße Anzeige ist daher besonders einfach und kostengünstig im Aufbau, wenn durch den Bereich des Anzeigefeldes bzw. des Lichtfilters, durch den Licht des niedrigsten der Wellenlängenbereiche hindurchtretbar ist, Licht des niedrigsten Wellenlängenbereichs und Licht darunterliegender Wellenlängen mit hoher Transmission hindurchtretbar ist und/oder wenn durch den Bereich des Anzeigefeldes bzw. des Lichtfilters, durch den Licht des höchsten der Wellenlängenbereiche hindurchtretbar ist, Licht des höchsten Wellenlängenbereichs und Licht darüberliegender Wellenlängen mit hoher Transmission hindurchtretbar ist.

Grundsäzlich sind beliebige Lichtquellen (z. B. Leuchtstoffröhren, EL-Folien, LEDs, Glühlampen) allein oder in Kombination miteinander für die Erfindung einsetzbar. Es ist auch vorstellbar, eine einzige Lichtquelle zu verwenden, von der je nach Ansteuerung Licht unterschiedlicher Wellenlänge abstrahlbar ist. Gemäß einer vorteilhaften Weiterbildung der Erfindung weist die Beleuchtungseinrichtung hingegen eine Lichtquelle, von der Licht des ersten Wellenlängenbereichs ausstrahlbar ist, und eine Lichtquelle, von der Licht des zweiten Wellenlängenbereichs ausstrahlbar ist, auf. Auf diese Weise sind durch die einfache Anpaßbarkeit der Durchlässigkeit der verschiedenen Bereiche des Anzeigefeldes sowie der Wellenlängen des von der Beleuchtungseinrichtung ausstrahlbaren Lichts besonders einfach und auch in großen Stückzahlen kostengünstig herstellbare Anzeigen realisierbar.

Sind die Lichtquellen gemäß einer anderen vorteilhaften Weiterbildung der Erfindung Glühlampen, so wird eine weitere Vergünstigung der Anzeige erreicht.

Hingegen ist die Beleuchtungseinrichtung besonders langlebig und weist eine nur geringe Verlustleistung in Form von Abwärme auf, wenn die Lichtquellen vorteilhaft LED-Chips aufweisen. Gemäß einer anderen vorteilhaften Weiterbildung der Erfindung sind dabei die beiden Lichtquellen jeweils als LED-Chip in eine einzige Multi-LED integriert. Auf diese Weise wird der Bauteileumfang der Anzeige kostensenkend weiter verringert.

Das Anzeigefeld könnte beispielsweise eine mit einem oder mehreren Symbolen farbig bedruckte, lichtdurchlässige Scheibe sein. Vorteilhaft sind auf dem Anzeigfeld jedoch wechselbare Symbole und/oder Zeichen darstellbar. Dies wird in günstiger Weise dadurch erreicht, daß das Anzeigefeld vorzugsweise eine transmissiv oder transflektiv beleuchtbare Flüssigkristallanzeige aufweist.

Dabei könnte eine Farbanzeige verwendet werden, so daß die Durchlässigkeit für Licht der unterschiedlichen Wellenlängenbereiche in den verschiedenen Bereichen des Anzeigefeldes schaltbar ist. Sowohl besonders kontrastreich als auch kostengünstig ist die Anzeige hingegen vorteilhaft, wenn die Flüssigkristallanzeige eine Monochromanzeige ist.

Ein besonders hell leuchtendes Anzeigefeld wird gemäß einer anderen vorteilhaften Weiterbildung der Erfindung dadurch erreicht, daß auf dem Anzeigefeld dunkle Zeichen vor einem hellen Hintergrund darstellbar sind.

Insbesondere bei überwiegender Verwendung einer erfindungsgemäßen Anzeige in dunkler Umgebung kann eine solche Helligkeit hingegen zu unerwünschten Blendeffekten führen. Daher ist es weiterhin von besonderem Vorteil, wenn auf dem Anzeigefeld helle Zeichen vor einem dunklen Hintergrund darstellbar sind.

Ein besonders einfacher, kostengünstiger und gewichtssparender Aufbau der erfindungsgemäßen Anzeige ergibt sich vorteilhaft, wenn das Anzeigefeld ein Zifferblatt für ein Kraftfahrzeuganzeigeinstrument ist.

Die Ablesbarkeit der erfindungsgemäßen Anzeigen wird mit einer anderen vorteilhaften Weiterbildung der Erfindung dadurch weiter verbessert, daß die Transmission des ersten Bereichs des Anzeigefeldes bzw. des Lichtfilters und die Transmission des zweiten Bereichs des Anzeigefeldes bzw. des Lichtfilters derart angepaßt sind, daß die Helligkeit des ersten Bereichs bei Beleuchtung mit Licht des ersten Wellenlängenbereichs in etwa der Helligkeit des zweiten Bereichs bei Beleuchtung mit Licht des zweiten Wellenlängenbereichs entspricht.

Unerwünschte und eine Anpassung des menschlichen Auges an die jeweilige Anzeigehelligkeit erfordernde Helligkeitssprünge treten damit nicht auf. Dieses ist insbesondere dann von Vorteil, wenn die Durchlässigkeiten der verschiedenen Bereiche um mehr als 10 % voneinander abweichen. Die Transmissionsangleichung der verschiedenen Bereiche kann beispielsweise durch einen Grau- oder Rasterdruck unterschiedlicher Dichte und damit differierender Durchlässigkeit erreicht werden.

Eine gleichmäßige Helligkeit über das gesamte Anzeigefeld unabhängig von der Beleuchtung wird gemäß einer anderen vorteilhaften Weiterbildung der Erfindung dadurch erreicht, daß die Transmission des ersten Bereichs des Anzeigefeldes bzw. des Lichtfilters und die Transmission des zweiten Bereichs des Anzeigefeldes bzw. des Lichtfilters derart aneinander und an die Transmission des Bereichs des Anzeigefeldes bzw. des Lichtfilters, durch den sowohl Licht des ersten Wellenlängenbereichs als auch Licht des zweiten Wellenlängenbereichs hindurchtretbar ist, angepaßt sind, daß die Helligkeit der einzelnen Bereiche jeweils sowohl bei Beleuchtung mit Licht des ersten Wellenlängenbereichs als auch bei Beleuchtung mit Licht des zweiten Wellenlängenbereichs in etwa gleich ist. Das kann in besonders einfacher Weise zum Beispiel dadurch erreicht werden, daß - orientiert an dem Bereich mit der niedrigsten Transmission - durch einen Graudruck angepaßter Dichte eine Transmissionsminderung der ursprünglich eine höhere Transmission aufweisenden anderen Bereiche herbeigeführt wird. Nur mit sehr hohem technischen Aufwand ist es dabei möglich, eine identische Transmission über das gesamte Anzeigefeld zu erzielen; daher wird der Vorteil bereits dann erreicht, wenn die Transmissionsunterschiede der einzelnen Bereiche nur unwesentlich oberhalb der Wahrnehmbarkeitsgrenze liegen.

Die Erfindung kann sehr unterschiedlich ausgeführt werden. Sie wird im folgenden anhand von in den beigefügten Zeichnungen dargestellten Ausführungsbeispielen näher erläutert. Darin zeigt in schematisierter Darstellung
- Fig. 1:: ein Anzeigefeld einer erfindungsgemäßen Anzeige in Draufsicht,
- Fig. 2:: ein Anzeigefeld einer zweiten erfindungsgemäßen Anzeige in Draufsicht,
- Fig. 3:: einen Schnitt der Anzeige aus Fig. 1 entlang Linie III - III,
- Fig. 4:: einen Schnitt der Anzeige aus Fig. 2 entlang Linie IV - IV,
- Fig. 5:: ein Anzeigefeld einer weiteren erfindungsgemäßen Anzeige in Draufsicht,
- Fig. 6:: einen Schnitt der Anzeige aus Fig. 5 entlang Linie VI - VI und
- Fig. 7:: Emissionsspektren einer Beleuchtungseinrichtung und Transmissionsspektren von Bereichen von Anzeigefeldern der Anzeigen aus Figuren 1, 2, 5.

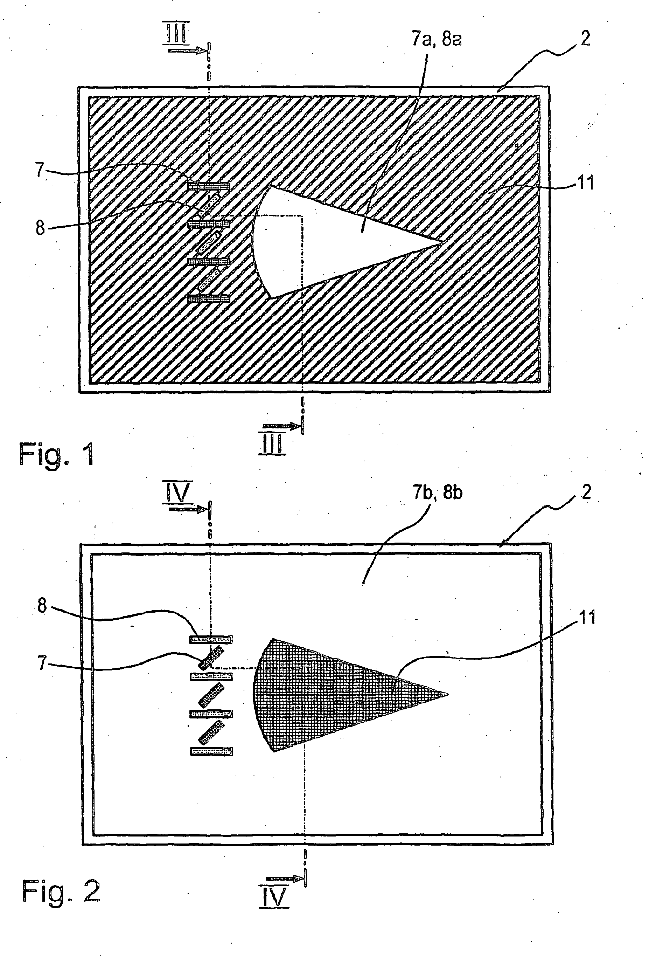

Figur 1 zeigt ein Anzeigefeld 2 eines Zifferblattes einer hier nicht weiter dargestellten Anzeige, die ein Kombinationsinstrument eines Kraftfahrzeugs ist. Auf dem Anzeigefeld 2 ist wahlweise ein Symbol für eingeschaltetes Fernlicht oder ein Symbol für eingeschaltetes Fahrlicht (Abblendlicht) des Fahrzeugs in Negativdarstellung, d. h. das Symbol erscheint hell gegenüber einem dunklen Anzeigehintergrund, anzeigbar.

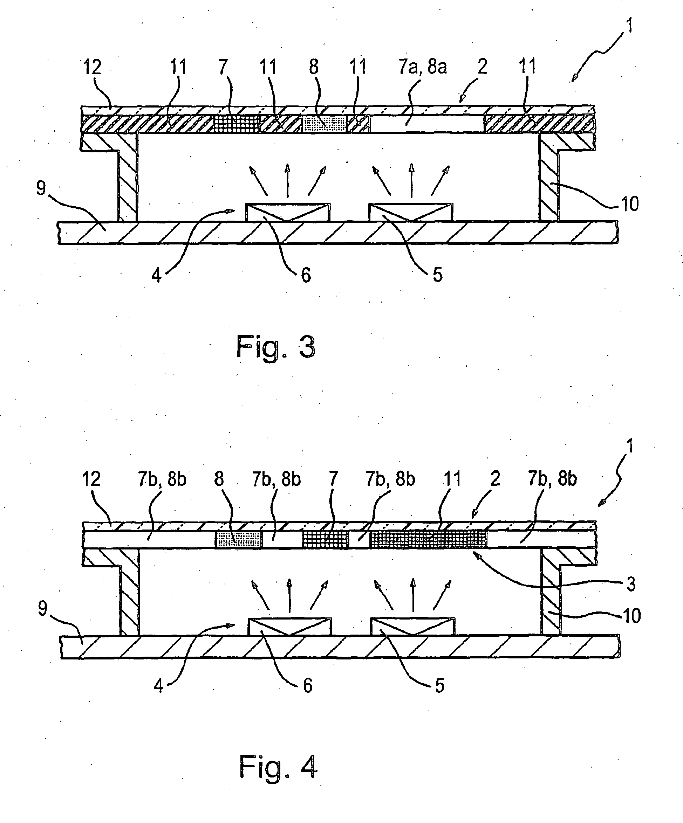

In Figur 3 ist in einer entsprechenden Schnittdarstellung zu erkennen, daß auf einer Leiterplatte 9 der Anzeige 1 eine zwei Lichtquellen 5, 6 in Form von LEDs aufweisende Beleuchtungseinrichtung 4 zur Durchleuchtung des Anzeigefeldes 2 angeordnet ist. Von der ersten Lichtquelle 5 ist blaues Licht eines ersten Wellenlängenbereichs und von der zweiten Lichtquelle 6 grünes Licht eines zweiten Wellenlängenbereichs abstrahlbar. Ein als Lichtschacht ausgebildetes Gehäuse 10 erhöht den zur Beleuchtung des Anzeigefeldes 2 nutzbaren Lichtanteil der Beleuchtungseinrichtung 4 und schirmt das von dieser abgestrahlte Licht gegenüber weiteren Teilen der Anzeige 1 ab. An der der Beleuchtungseinrichtung 4 abgewandten Seite des Gehäuses 10 ist das Anzeigefeld 2 in einem aus einer rückseitig bedruckten, durchleuchtbaren Folie 12 bestehenden Zifferblatt des Kombinationsinstrumentes angeordnet.

Das Anzeigefeld 2 weist verschiedene, jeweils als Druck auf die Folie 12 aufgebrachte Bereiche auf: Durch einen ersten Bereich 7, 7a ist das blaue Licht der ersten Lichtquelle 5 hindurchtretbar. Dazu weist ein aus in etwa parallel zueinander und waagerecht angeordneten Balken bestehender Teilbereich 7 des ersten Bereichs 7, 7a eine auf das Licht der ersten Lichtquelle 5 abgestimmte blaue Bedruckung und ein kreissegmentförmiger Teilbereich 7a keinerlei Bedruckung auf.

Ein zweiter Bereich 8, 8a des Anzeigefeldes 2 ist in einem aus in etwa parallel zueinander und unter einem Winkel von 45° gegenüber der Waagerechten angeordneten Balken bestehenden Teilbereich 8 mit einer mit der Beleuchtungsfarbe der zweiten Lichtquelle 6 korrespondierenden grünen Bedruckung und in einem sich mit dem Teilbereich 7a des ersten Bereichs 7, 7a überschneidenden kreissegmentförmigen Teilbereich 8a des zweiten Bereichs 8, 8a mit keinerlei Bedruckung versehen.

Ein übriger, den Hintergrund bildender Bereich 11 des Anzeigefeldes 2 sperrt einen Lichtdurchtritt und ist dafür mit einem Schwarzdruck versehen. Der Blaudruck des ersten Bereichs 7 des Anzeigefeldes 2 ist für Licht größerer Wellenlänge (und damit auch für das von der zweiten, grün leuchtenden Lichtquelle 6 abgestrahlte Licht) undurchlässig. Der Gründruck des zweiten Bereichs 8 des Anzeigefeldes 2 ist hingegen undurchlässig für Licht geringerer Wellenlänge, einschließlich des von der ersten Lichtquelle 5 abgestrahlten blauen Lichts.

Bei Einschaltung der ersten, blau leuchtenden Lichquelle 5 tritt somit Licht nur durch den ersten Bereich 7, 7a des Anzeigefeldes 2 hindurch; für einen Beobachter ist vor einem dunklen Anzeigehintergrund ein blau leuchtendes Anzeigesymbol für eingeschaltetes Fernlicht erkennbar. Bei leuchtender zweiter, grünes Licht abstrahlender Lichtquelle 6 wird nur der zweite Bereich 8, 8a des Anzeigefeldes 2 durchleuchtet. Der Beobachter erkennt vor einem dunklen Anzeigehintergrund ein grün leuchtendes Symbol, das eingeschaltetes Fahrlicht signalisiert.

Zusätzlich kann das gesamte Anzeigefeld 2 einschließlich der durchleuchtbaren Bereiche 7, 7a, 8, 8a an seiner dem Betrachter zugewandten Vorderseite mit einem Graudruck zur Erzeugung eines Black-Panel-Effekts versehen sein.

Eine Anzeige 1 mit einem Anzeigefeld 2, auf dem in Form von dunklen Zeichen vor einem hellen Hintergrund Figuren 1, 3 entsprechende Symbole darstellbar sind, ist in Figuren 2, 4 gezeigt, wobei - wie auch in den folgenden Figuren - für sich entsprechende Bauelemente gleiche Bezugszeichen verwendet sind. Hier ist wiederum von einer ersten Lichtquelle 5 blaues Licht und von einer zweiten Lichtquelle 6 grünes Licht abstrahlbar. An seiner Rückseite ist das Anzeigefeld 2 eines eine rückseitig bedruckte, durchleuchtbare Folie 12 aufweisenden Zifferblattes in einem Teilbereich 11 mit einem einen Durchtritt von blauem und grünem Licht verhindernden Sperrdruck versehen.

Darüber hinaus weist das Anzeigefeld 2 einen einen Durchtritt Licht blauer Färbung gestattenden Bereich 7, 7b mit einem ersten, blau bedruckten Teilbereich 7 und einem zweiten, unbedruckten Teilbereich 7b auf. Durch einen weiteren Bereich 8, 8b, der einen ersten Teilbereich 8 mit grüner Bedruckung und einen zweiten Teilbereich 8b ohne Bedruckung umfaßt, ist das grüne Licht der zweiten Lichtquelle 6 hindurchtretbar. Der Anzeigehintergrund wird hier gebildet von den beiden keine Bedruckung aufweisenden Teilbereichen 7b, 8b des ersten Bereiches 7, 7b und des zweiten Bereiches 8, 8b des Anzeigefeldes 2.

Bei eingeschalteter blauer Lichtquelle 5 tritt bei dieser Anzeige Licht durch den ersten Bereich 7, 7b des Anzeigefeldes 2 hindurch, wobei für den Betrachter ein dunkles, eingeschaltetes Fernlicht signalisierendes Symbol vor einem blau leuchtenden Anzeigehintergrund erkennbar ist. Demgegenüber erscheint bei eingeschalteter grün leuchtender Lichtquelle 6 ein dunkles, eingeschaltetes Fahrlicht signalisierendes Symbol vor einem grünen Hintergrund.

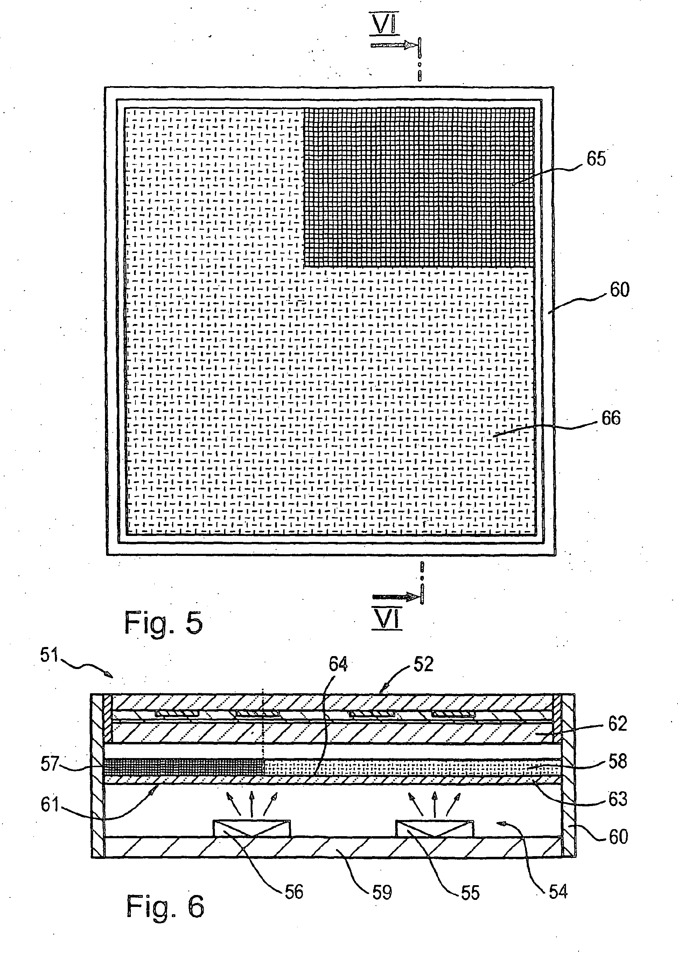

Eine weitere Anzeige 51 ist in Figuren 5, 6 dargestellt. Die Anzeige 51, die z. B. Bestandteil eines Kombinationsinstrumentes eines Kraftfahrzeugs oder in die Mittelkonsole eines Kraftfahrzeugs eingebaut sein kann, weist ein Anzeigefeld 52 mit einer Flüssigkristallanzeige 62 auf. Auf einer auf der einem Beobachter abgewandten Rückseite des Anzeigefeldes 52 angeordneten Leiterplatte 59 der Anzeige 51 ist eine erste, blaues Licht abstrahlende Lichtquelle 55 und eine zweite Lichtquelle 56, von der grünes Licht abstrahlbar ist, einer Beleuchtungseinrichtung 54 zur transmissiven Beleuchtung der Flüssigkristallanzeige 62 des Anzeigefeldes 52 angeordnet.

Zwischen der Beleuchtungseinrichtung 54 und dem Anzeigefeld 52 ist ein Lichtfilter 61 angeordnet. Flüssigkristallanzeige 62, Lichtfilter 61 und Leiterplatte 59 der Anzeige 51 sind in ein Gehäuse 60 eingebaut.

Der Lichtfilter 61 umfaßt eine lichtdurchlässige Scheibe 63, die an ihrer dem Anzeigefeld 52 zugewandten Vorderseite 64 einen ersten Bereich 57 und einen zweiten Bereich 58 des Lichtfilters 61 bildend bedruckt ist. Dabei weist der erste Bereich 57 einen für das Licht der ersten Lichtquelle 55 durchlässigen Blaudruck und der zweite Bereich 58 einen für das Licht der zweiten Lichtquelle 56 durchlässigen Gründruck auf.

Der erste Bereich 57 des Lichtfilters 61 sperrt darüber hinaus einen Durchtritt von grünem Licht, und der zweite Bereich 58 des Lichtfilters 61 sperrt einen Durchtritt von blauem Licht. Bei eingeschalteter erster Lichtquelle 55 wird somit nur der erste Teilbereich 57 des Lichtfilters 61 sowie ein diesem Bereich 57 gegenüberliegender erster Sektor 65 der Flüssigkristallanzeige 62 durchleuchtet. Eine Durchleuchtung des zweiten Bereichs 58 des Lichtfilters 61 sowie eines diesem gegenüberliegenden zweiten Sektors 66 der Flüssigkristallanzeige 62 erfolgt hingegen nur bei eingeschalteter zweiter Lichtquelle 56. Auf diese Weise ist es ohne Zuhilfenahme von Lichttrennwänden sehr einfach möglich, verschiedene Bereiche eines Anzeigefeldes in unterschiedlichen Farben wahlweise zu beleuchten.

Bei der hier beschriebenen Anzeige 51 ist der erste Sektor 65 der Flüssigkristallanzeige 62 mit blauem Licht und der zweite Sektor 66 der Flüssigkristallanzeige 62 mit grünem Licht beleuchtbar. Bei gleichzeitiger Einschaltung beider Lichtquellen 55, 56 wird die gesamte Flüssigkristallanzeige 62 beleuchtet, wobei der erste Sektor 65 blau und der zweite Sektor 66 grün erscheint.

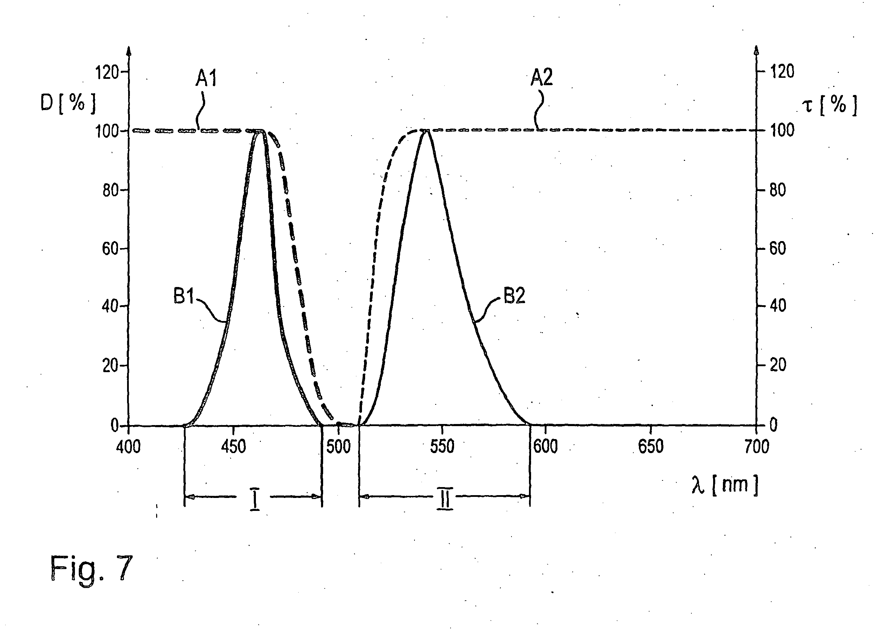

Zur Verdeutlichtung der Funktionsweise der jeweiligen Beleuchtung vorbeschriebener-Anzeigen ist in Figur 7 in einem Diagramm über der Wellenlängen λ des von den Beleuchtungseinrichtungen abgestrahlten Lichts zum einen (linke Skalierung) die relative spektrale Strahldichte D und zum anderen (rechte Skalierung) die relative Transmission τ der verschiedenen Bereiche der Anzeigefelder bzw. des Lichtfilters aufgetragen.

Es ist zu erkennen, daß von der Beleuchtungseinrichtung Licht eines ersten Wellenlängenbereichs I mit einer Wellenlänge von in etwa 430 bis 490 nm und Licht eines zweiten Wellenlängenbereichs II mit einer Wellenlänge von in etwa 510 bis 590 nm abstrahlbar ist. Die Spektralkurve B1 des ersten Wellenlängenbereichs 1 und die Spektralkurve B2 des zweiten Wellenlängenbereichs II weisen keine Überschneidung auf und fallen ober- und unterhalb ihres jeweiligen Spitzenwerts von in etwa 460 nm bzw. in etwa 540 nm steil ab.

Ferner sind die Transmissionskurven A1 der mit einer blauen Bedruckung versehenen Bereiche der Anzeigefelder bzw. des Lichtfilters und A2 der mit einer grünen Bedruckung versehenen Bereiche der Anzeigefelder bzw. des Lichtfilters eingezeichnet. Es ist zu erkennen, daß das blaue Licht des Wellenlängenbereichs I zwar vollständig die blau bedruckten Bereiche zu durchtreten vermag, hingegen aber von den grün bedruckten Bereichen vollständig gesperrt wird. Mit dem grünen Licht des Wellenlängenbereichs II verhält es sich genau umgekehrt.

## Patentansprüche

1. Anzeige für ein Kraftfahrzeug, mit einem durchleuchtbaren Anzeigefeld und einer auf der einem Beobachter abgewandten Rückseite des Anzeigefeldes in einem Lichtschacht angeordneten Beleuchtungseinrichtung zur Durchleuchtung des Anzeigefeldes, wobei von der Beleuchtungseinrichtung (4) Licht eines ersten (I; 5) und eines zweiten (II; 6) Wellenlängenbereichs ausstrahlbar ist und wobei das Licht des ersten Wellenlängenbereichs(I) im wesentlichen nur durch einen ersten Bereich (7, 7a, 7b) des Anzeigefeldes (2) und das Licht des zweiten Wellenlängenbereichs (II) im wesentlichen nur durch einen zumindest teilweise von dem ersten Bereich (7, 7a, 7b) des Anzeigefeldes (2) verschiedenen zweiten Bereich (8, 8a, 8b) des Anzeigefeldes (2) hindurchtretbar ist, **dadurch gekennzeichnet, dass** das Anzeigefeld (2) einen Bereich (7a, 8a; 7b, 8b) aufweist, durch den sowohl Licht des ersten Wellenlängenbereichs (I) als auch Licht des zweiten Wellenlängenbereichs (II) hindurchtretbar ist.

2. Anzeige nach Anspruch 1, **dadurch gekennzeichnet, dass** das Anzeigefeld (2) einen Bereich (11) aufweist, der sowohl einen Durchtritt von Licht des ersten Wellenlängenbereichs (I) als auch einen Durchtritt von Licht des zweiten Wellenlängenbereichs (II) im Wesentlichen sperrt.

3. Anzeige für ein Kraftfahrzeug, mit einem durchleuchtbaren Anzeigefeld und einer auf der einem Beobachter abgewandten Rückseite des Anzeigefeldes in einem Lichtschacht angeordneten Beleuchtungseinrichtung zur Durchleuchtung des Anzeigefeldes, wobei von der Beleuchtungseinrichtung (4) Licht eines ersten (I; 5) und eines zweiten (II; 6) Wellenlängenbereichs ausstrahlbar ist, wobei zwischen der Beleuchtungseinrichtung (54) und dem Anzeigefeld (52) ein Lichtfilter (61) angeordnet ist und wobei das Licht des ersten Wellenlängenbereichs (I) im wesentlichen nur durch einen ersten Bereich (57) des Lichtfilters (61) und das Licht des zweiten Wellenlängenbereichs (II) im wesentlichen nur durch einen zumindest teilweise von dem ersten Bereich (57) des Lichtfilters (61) verschiedener zweiten Bereich (58) des Lichtfilters (61) hindurchtretbar ist, **dadurch gekennzeichnet, dass** der Lichtfilter (61) einen Bereich aufweist, durch den sowohl Licht des ersten Wellenlängenbereichs (I) als auch Licht des zweiten Wellenlängenbereichs (II) hindurchtretbar ist.

4. Anzeige nach Anspruch 3, **dadurch gekennzeichnet, dass** der Lichtfilter (61) eine Farbfilterscheibe ist.

5. Anzeige nach Anspruch 3 oder 4, **dadurch gekennzeichnet, dass** der Lichtfilter (61) ein Streufilter ist.

6. Anzeige nach einem der Ansprüche 3 bis 5, **dadurch gekennzeichnet, dass** der Lichtfilter (61) einen Bereich aufweist, der sowohl einen Durchtritt von Licht des ersten Wellenlängenbereichs (I) als auch einen Durchtritt von Licht des zweiten Wellenlängenbereichs (II) im wesentlichen sperrt.

7. Anzeige nach einem der vorhergehenden Ansprüche, **dadurch gekennzeichnet, dass** der erste Wellenlängenbereich (I) und der zweite Wellenlängenbereich (II) des von der Beleuchtungseinrichtung (4; 54) ausstrahlbaren Lichts im Wesentlichen unterschiedliche Wellenlängen aufweisen.

8. Anzeige nach einem der vorhergehenden Ansprüche, **dadurch gekennzeichnet, dass** einer der Wellenlängenbereiche (I) in etwa blaues Licht umfasst.

9. Anzeige nach Anspruch 8, **dadurch gekennzeichnet, dass** der Wellenlängenbereich (I) Wellenlängen von in etwa 430 bis 490 nm umfasst.

10. Anzeige nach einem der vorhergehenden Ansprüche, **dadurch gekennzeichnet, dass** einer der Wellenlängenbereiche (II) in etwa grünes Licht umfasst.

11. Anzeige nach Anspruch 10, **dadurch gekennzeichnet, dass** der Wellenlängenbereich (II) Wellenlängen von in etwa 510 bis 590 nm umfasst.

12. Anzeige nach einem der vorhergehenden Ansprüche, **dadurch gekennzeichnet, dass** einer der Wellenlängenbereiche in etwa rotes Licht umfasst.

13. Anzeige nach Anspruch 12, **dadurch gekennzeichnet, dass** der Wellenlängenbereich Wellenlängen von in etwa 610 bis 750 nm umfasst.

14. Anzeige nach einem der vorhergehenden Ansprüche, **dadurch gekennzeichnet, dass** durch den Bereich (7, 7a, 7b; 57) des Anzeigefeldes (2) bzw. des Lichtfilters (61), durch den Licht des niedrigsten (I) der Wellenlängenbereiche (I, II) hindurchtretbar ist, Licht des niedrigsten Wellenlängenbereichs (I) und Licht darunterliegender Wellenlängen mit hoher Transmission hindurchtretbar ist.

15. Anzeige nach einem der vorhergehenden Ansprüche, **dadurch gekennzeichnet, dass** durch den Bereich (8, 8a, 8b; 58) des Anzeigefeldes (2) bzw. des Lichtfilters (61), durch den Licht des höchsten (II) der Wellenlängenbereiche (I, II) hindurchtretbar ist, Licht des höchsten Wellenlängenbereichs (II) und Licht darüberliegender Wellenlängen mit hoher Transmission hindurchtretbar ist.

16. Anzeige nach einem der vorhergehenden Ansprüche, **dadurch gekennzeichnet, dass** die Beleuchtungseinrichtung (4; 54) eine Lichtquelle (5; 55), von der Licht des ersten Wellenlängenbereichs (I) ausstrahlbar ist, und eine Lichtquelle (6; 56), von der Licht des - zweiten Wellenlängenbereichs (II) ausstrahlbar ist, aufweist.

17. Anzeige nach Anspruch 16, **dadurch gekennzeichnet, dass** die Lichtquellen Glühlampen sind.

18. Anzeige nach Anspruch 17, **dadurch gekennzeichnet, dass** die Lichtquellen (5, 6; 55, 56) LED-Chips aufweisen.

19. Anzeige nach Anspruch 18, **dadurch gekennzeichnet, dass** die beiden Lichtquellen jeweils als LED-Chip in eine einzige Multi-LED integriert sind.

20. Anzeige nach einem der vorhergehenden Ansprüche, **dadurch gekennzeichnet, dass** das Anzeigefeld (2; 52) eine transmissiv oder transflektiv beleuchtbare Flüssigkristallanzeige (62) aufweist.

21. Anzeige nach Anspruch 20, **dadurch gekennzeichnet, dass** die Flüssigkristallanzeige (62) eine Monochromanzeige ist.

22. Anzeige nach einem der vorhergehenden Ansprüche, **dadurch gekennzeichnet, dass** auf dem Anzeigefeld (2; 52) helle Zeichen vor einem dunklen Hintergrund darstellbar sind.

23. Anzeige nach einem der vorhergehenden Ansprüche, **dadurch gekennzeichnet, dass** auf dem Anzeigefeld (2; 52) dunkle Zeichen vor einem hellen Hintergrund darstellbar sind.

24. Anzeige nach einem der vorhergehenden Ansprüche, **dadurch gekennzeichnet, dass** das Anzeigefeld (2; 52) ein Zifferblatt für ein Kraftfahrzeuganzeigeinstrument ist.

25. Anzeige nach einem der vorhergehenden Ansprüche, **dadurch gekennzeichnet, dass** die Transmission des ersten Bereichs (7, 7a, 7b; 57) des Anzeigefeldes (2) bzw. des Lichtfilters (61) und die Transmission des zweiten Bereichs (8, 8a, 8b; 58) des Anzeigefeldes (2) bzw. des Lichtfilters (61) derart angepasst sind, dass die Helligkeit des ersten Bereichs (7, 7a, 7b; 57) bei Beleuchtung mit Licht des ersten Wellenlängenbereichs (I; Lichtquelle 5; 55) in etwa der Helligkeit des zweiten Bereichs (8, 8a, 8b; 58) bei Beleuchtung mit Licht des zweiten Wellenlängenbereichs (II; Lichtquelle 6; 56) entspricht.

26. Anzeige nach einem der vorhergehenden Ansprüche, **dadurch gekennzeichnet, dass** die Transmission des ersten Bereichs (7; 57) des Anzeigefeldes (2) bzw. des Lichtfilters (61) und die Transmission des zweiten Bereichs (8; 58) des Anzeigefeldes (2) bzw. des Lichtfilters (61) derart aneinander und an die Transmission des Bereichs (7a, 8a; 7b, 8b) des Anzeigefeldes (2) bzw. des Lichtfilters (61), durch den sowohl Licht des ersten Wellenlängenbereichs (I) als auch Licht des zweiten Wellenlängenbereichs (II) hindurchtretbar ist, angepasst sind, dass die Helligkeit der einzelnen Bereiche (7; 8; 7a, 8a; 7b, 8b; 57; 58) jeweils sowohl bei Beleuchtung mit Licht des ersten Wellenlängenbereichs (I) als auch bei Beleuchtung mit Licht des zweiten Wellenlängenbereichs (II) in etwa gleich ist.

## Claims

1. Display, for a motor vehicle, having a transilluminable display panel and an illuminating device, arranged in a light shaft on the rear side of the display panel averted from an observer, for transilluminating the display panel, in which the illuminating device (4) can emit light of a first (I; 5) and/or a second (II; 6) wavelength region, and in which the light of the first wavelength region (I) can essentially pass through only a first region (7, 7a, 7b) of the display panel (2), and the light of the second wavelength region (II) can essentially pass through only a second region (8, 8a, 8b) of the display panel (2) which differs at least partially from the first region (7, 7a, 7b) of the display panel (2) **characterized in that** the display panel (2) has a region (7a, 8a; 7b, 8b) through which both light of the first wavelength region (I) and light of the second wavelength region (II) can pass.

2. Display according to claim 1, **characterized in that** the display panel (2) has a region (11) which essentially blocks both passage of light of the first wavelength region (I) and passage of light of the second wavelength region (II).

3. Display, for a motor vehicle, having a transilluminable display panel and an illuminating device, arranged in a light shaft on the rear side of the display panel averted from an observer, for transilluminating the display panel, in which the illuminating device (4) can emit light of a first (I; 5) and a second (II; 6) wavelength region, in which a light filter (61) is arranged between the illuminating device (54) and the display field (52), in which the light of the first wavelength region (I) can pass essentially only through a first region (57) of the light filter (61), and in which the light of the second wavelength region (II) can pass essentially only through a second region (58) of the light filter (61) differing at least partially from the first region (57) of the light filter (61) **characterized in that** the light filter (61) has a region through which both light of the first wavelength region (I) and light of the second wavelength region (II) can pass.

4. Display according to Claim 3, **characterized in that** the light filter (61) is a color filter pane.

5. Display according to Claim 3 or 4, **characterized in that** the light filter (61) is a scatter filter.

6. Display according to one of Claims 3 to 5, **characterized in that** the light filter (61) has a region which essentially blocks both passage of light of the first wavelength region (I) and passage of light of the second wavelength region (II).

7. Display according to one of the preceding claims, **characterized in that** the first wavelength region (I) and the second wavelength region (II) of the light emitted by the illuminating device (4; 54) have essentially different wavelengths.

8. Display according to one of the preceding claims, **characterized in that** one of the wavelength regions (I) covers approximately blue light.

9. Display according to Claim 8, **characterized in that** the wavelength region (I) covers wavelengths from approximately 430 to 490 nm.

10. Display according to one of the preceding claims, **characterized in that** one of the wavelength regions (II) covers approximately green light.

11. Display according to Claim 10, **characterized in that** the wavelength region (II) covers wavelengths from approximately 510 to 590 nm.

12. Display according to one of the preceding claims, **characterized in that** one of the wavelength regions covers approximately red light.

13. Display according to Claim 12, **characterized in that** the wavelength region covers wavelengths from approximately 610 to 750 nm.

14. Display according to one of the preceding claims, **characterized in that** light of the lowest wavelength region (I) and light of wavelengths therebelow can pass with high transmission through the region (7, 7a, 7b; 57) of the display panel (2) or the light filter (61), through which light of the lowest (I) of the wavelength regions (I, II) can pass.

15. Display according to one of the preceding claims, **characterized in that** light of the highest wavelength region (II) and light of wavelengths thereabove can pass with high transmission through the region (8, 8a, 8b; 58) of the display panel (2) or the light filter (61) through which light of the highest (II) of the wavelength regions (I, II) can pass.

16. Display according to one of the preceding claims, **characterized in that** the illuminating device (4; 54) has a light source (5; 55) from which light of the first wavelength region (I) can be emitted, and a light source (6; 56) from which light of the second wavelength region (II) can be emitted.

17. Display according to Claim 16, **characterized in that** the light sources are incandescent lamps.

18. Display according to Claim 17, **characterized in that** the light sources (5, 6; 55, 56) have LED chips.

19. Display according to Claim 18, **characterized in that** the two light sources are in each case integrated as an LED chip into a single multi-LED.

20. Display according to one of the preceding claims, **characterized in that** the display panel (2; 52) has a liquid crystal display (62) which can be illuminated by transmission or transflection.

21. Display according to Claim 20, **characterized in that** the liquid crystal display (62) is a monochromatic display.

22. Display according to one of the preceding claims, **characterized in that** bright characters can be represented against a dark background on the display panel (2;52).

23. Display according to one of the preceding claims, **characterized in that** dark characters can be represented against a bright background on the display panel (2; 52).

24. Display according to one of the preceding claims, **characterized in that** the display panel (2; 52) is a dial for a motor vehicle instrument.

25. Display according to one of the preceding claims, **characterized in that** the transmission of the first region (7, 7a, 7b; 57) of the display panel (2) or the light filter (61), and the transmission of the second region (8, 8a, 8b; 58) of the display panel (2) or the light filter (61) are matched in such a way that the brightness of the first region (7, 7a, 7b; 57) in the case of illumination with light of the first wavelength region (I; light source 5; 55) corresponds approximately to the brightness of the second region (8, 8a, 8b; 58) in the case of illumination with light of the second wavelength region (II; light source 6, 56).

26. Display according to one of the preceding claims, **characterized in that** the transmission of the first region (7; 57) of the display panel (2) or the light filter (61), and the transmission of the second region (8; 58) of the display panel (2) or the light filter (61) are matched to one another and to the transmission of the region (7a, 8a; 7b, 8b) of the display panel (2) or the light filter (61) through which both light of the first wavelength region (I) and light of the second wavelength region (II) can pass in such a way that the brightness of the individual regions (7; 8; 7a, 8a; 7b, 8b; 57; 58) is respectively approximately the same both in the case of illumination with light of the first wavelength region (I) and in the case of illumination with light of the second wavelength region (II).

## Revendications

1. Afficheur pour un véhicule automobile, comportant un champ d'affichage pouvant être éclairé par transparence et un dispositif d'éclairage destiné à l'éclairage par transparence du champ d'affichage et placé dans un puits de lumière sur la face arrière du champ d'affichage opposée à un observateur, dans lequel le dispositif d'éclairage (4) peut émettre de la lumière d'une première gamme (I ; 5) de longueurs d'onde et/ou d'une deuxième gamme (II ; 6) de longueurs d'onde et dans lequel la lumière de la première gamme (I) de longueurs d'onde ne peut passer, pour l'essentiel, qu'à travers une première zone (7, 7a, 7b) du champ d'affichage (2) et la lumière de la deuxième gamme (II) de longueurs d'onde ne peut passer, pour l'essentiel, qu'à travers une deuxième zone (8, 8a, 8b) du champ d'affichage (2) au moins partiellement différente de la première zone (7, 7a, 7b) du champ d'affichage (2),**caractérisé par le fait que** le champ d'affichage (2) comporte une zone (7, 8a; 7b, 8b) à travers laquelle peut passer à la fois de la lumière de la première gamme (I) de longueurs d'onde et de la lumière de la deuxième gamme (II) de longueurs d'onde.

2. Afficheur selon la revendication 1, **caractérisé par le fait que** le champ d'affichage (2) comporte une zone (11) qui bloque, pour l'essentiel, à la fois un passage de lumière de la première gamme (I) de longueurs d'onde et un passage de lumière de la deuxième gamme (II) de longueurs d'onde.

3. Afficheur pour un véhicule automobile comportant un champ d'affichage éclairé par transparence et un dispositif d'éclairage, destiné à l'éclairage par transparence du champ d'affichage et disposé dans un puits de lumière sur la face arrière du champ d'affichage opposée à un observateur, dans lequel le dispositif d'éclairage (4) peut émettre de la lumière d'une première gamme (I ; 5) de longueurs d'onde et d'une deuxième gamme (II ; 6) de longueurs d'onde, dans lequel un filtre (61) de lumière est placé entre le dispositif (54) d'éclairage et le champ (52) d'affichage et dans lequel la lumière de la première gamme (I) de longueurs d'onde ne peut passer, pour l'essentiel, que par une première zone (57) du filtre (61) de lumière et la lumière de la deuxième plage (II) de longueurs d'onde ne peut passer, pour l'essentiel, que par une deuxième zone (58) du filtre (61) de lumière différente au moins partiellement de la première zone (57) du filtre (61) de lumière, **caractérisé en ce que** le filtre (61) de lumière comporte une zone à travers laquelle à la fois la lumière de la première gamme (I) de longueurs d'onde et la lumière de la deuxième gamme (II) de longueurs d'onde peut passer.

4. Afficheur selon la revendication 3, **caractérisé par le fait que** le filtre de lumière (61) est un disque de filtre chromatique.

5. Afficheur selon la revendication 3 ou 4, **caractérisé par le fait que** le filtre de lumière (61) est un filtre diffuseur.

6. Afficheur selon l'une des revendications 3 à 5, **caractérisé par le fait que** le filtre de lumière (61) comporte une zone qui bloque, pour l'essentiel, à la fois un passage de lumière de la première gamme (I) de longueurs d'onde et un passage de lumière de la deuxième gamme (II) de longueurs d'onde.

7. Afficheur selon l'une des revendications précédentes, **caractérisé par le fait que** la première gamme (I) de longueurs d'onde et la deuxième gamme (II) de longueurs d'onde de la lumière pouvant être émise par le dispositif d'éclairage (4; 54) ont, pour l'essentiel, des longueurs d'onde différentes.

8. Afficheur selon l'une des revendications précédentes, **caractérisé par le fait que** l'une des gammes (I) de longueurs d'onde comprend approximativement de la lumière bleue.

9. Afficheur selon la revendication 8, **caractérisé par le fait que** la gamme (I) de longueurs d'onde comporte des longueurs d'onde comprises approximativement entre 430 et 490 nm.

10. Afficheur selon l'une des revendications précédentes, **caractérisé par le fait que** l'une des gammes (II) de longueurs d'onde comprend approximativement de la lumière verte.

11. Afficheur selon la revendication 10, **caractérisé par le fait que** la gamme (II) de longueurs d'onde comporte des longueurs d'onde comprises approximativement entre 510 et 590 nm.

12. Afficheur selon l'une des revendications précédentes, **caractérisé par le fait que** l'une des gammes de longueurs d'onde comprend approximativement de la lumière rouge.

13. Afficheur selon la revendication 12, **caractérisé par le fait que** la gamme de longueurs d'onde comporte des longueurs d'onde comprises approximativement entre 610 et 750 nm.

14. Afficheur selon l'une des revendications précédentes, **caractérisé par le fait que**, à travers la zone (7, 7a, 7b; 57) du champ d'affichage (2) ou, respectivement, du filtre de lumière (61), à travers laquelle de la lumière de la plus basse (I) des gammes de longueurs d'onde (I, II) peut passer, de la lumière de la gamme de longueurs d'onde la plus petite (I) et de la lumière de longueurs d'onde encore plus petites peut passer avec une grande transmission.

15. Afficheur selon l'une des revendications précédentes, **caractérisé par le fait que**, à travers la zone (8, 8a, 8b; 58) du champ d'affichage (2) ou, respectivement, du filtre de lumière (61), à travers laquelle de la lumière de la plus grande (II) des gammes de longueurs d'onde (I, II) peut passer, de la lumière de la gamme de longueurs d'onde la plus grande (II) et de la lumière de longueurs d'onde encore plus grandes peut passer avec une grande transmission.

16. Afficheur selon l'une des revendications précédentes, **caractérisé par le fait que** le dispositif d'éclairage (4; 54) comporte une source lumineuse (5; 55) qui peut émettre de la lumière de la première gamme (I) de longueurs d'onde et une source lumineuse (6; 56) qui peut émettre de la lumière de la deuxième gamme (II) de longueurs d'onde.

17. Afficheur selon la revendication 16, **caractérisé par le fait que** les sources lumineuses sont des lampes à incandescence.

18. Afficheur selon la revendication 17, **caractérisé par le fait que** les sources lumineuses (5, 6; 55, 56) comportent des puces à diodes électroluminescentes.

19. Afficheur selon la revendication 18, **caractérisé par le fait que** les deux sources lumineuses sont chacune intégrées en tant que puce à diode électroluminescente dans une seule et unique multidiode électroluminescente.

20. Afficheur selon l'une des revendications précédentes, **caractérisé par le fait que** le champ d'affichage (2; 52) comporte un affichage à cristaux liquides (62) pouvant être éclairé par effet transmissif ou par effet transflectif.

21. Afficheur selon la revendication 20, **caractérisé par le fait que** l'affichage à cristaux liquides (62) est un affichage monochromatique.

22. Afficheur selon l'une des revendications précédentes, **caractérisé par le fait que**, sur le champ d'affichage (2; 52) peuvent être représentés des signes clairs devant un arrière-plan sombre.

23. Afficheur selon l'une des revendications précédentes, **caractérisé par le fait que** sur le champ d'affichage (2; 52) peuvent être représentés des signes sombres devant un arrière-plan clair.

24. Afficheur selon l'une des revendications précédentes, **caractérisé par le fait que** le champ d'affichage (2; 52) est un cadran d'un instrument indicateur de véhicule automobile.

25. Afficheur selon l'une des revendications précédentes, **caractérisé par le fait que** la transmission de la première zone (7, 7a, 7b; 57) du champ d'affichage (2) ou, respectivement, du filtre de lumière (61) et la transmission de la deuxième zone (8, 8a, 8b; 58) du champ d'affichage (2) ou, respectivement, du filtre de lumière (61) est adaptée de manière telle que la luminosité de la première zone (7, 7a, 7b; 57), lorsqu'elle est éclairée par de la lumière de la première gamme de longueurs d'onde (I ; source lumineuse 5; 55), correspond approximativement à la luminosité de la deuxième zone (8, 8a, 8b; 58) lorsqu'elle est éclairée par de la lumière de la deuxième gamme de longueurs d'onde (II ; source lumineuse 6; 56).

26. Afficheur selon l'une des revendications précédentes, **caractérisé par le fait que** la transmission de la première zone (7; 57) du champ d'affichage (2) ou, respectivement, du filtre de lumière (61) et la transmission de la deuxième zone (8; 58) du champ d'affichage (2) ou, respectivement, du filtre de lumière (61) sont adaptées l'une par rapport à l'autre et par rapport à la transmission de la zone (7a, 8a; 7b, 8b) du champ d'affichage (2) ou, respectivement, du filtre de lumière (61), à travers laquelle peut passer à la fois de la lumière de la première gamme (I) de longueurs d'onde et de la lumière de la deuxième gamme (II) de longueurs d'onde, de manière telle que la luminosité des différentes zones (7; 8; 7a, 8a; 7b, 8b; 57, 58) est approximativement la même à la fois sous un éclairage par de la lumière de la première gamme (I) de longueurs d'onde et sous un éclairage par de la lumière de la deuxième gamme (II) de longueurs d'onde.
